(19) **Europäisches Patentamt**

**European Patent Office**

**Office européen des brevets**

(11) **EP 1 460 252 B1**

(12) **EUROPÄISCHE PATENTSCHRIFT**

(45) Veröffentlichungstag und Bekanntmachung des Hinweises auf die Patenterteilung:
**17.05.2006 Patentblatt 2006/20**

(51) Int Cl.:
*F02D 23/00* *(2006.01)* *F02B 37/18* *(2006.01)*

(21) Anmeldenummer: **04002651.0**

(22) Anmeldetag: **06.02.2004**

(54) **Verfahren und Vorrichtung zum Betrieb einer Brennkraftmaschine mit einem Abgasturbolader**

Method and device for operating an internal combustion engine with turbocharger

Procédé et dispositif de fonctionnement d'un moteur à combustion interne avec turbocompresseur

(84) Benannte Vertragsstaaten:
**DE ES FR SE**

(30) Priorität: **23.06.2003 DE 10328056**
**20.03.2003 DE 10312385**

(43) Veröffentlichungstag der Anmeldung:
**22.09.2004 Patentblatt 2004/39**

(60) Teilanmeldung:
**05022361.9 / 1 614 881**

(73) Patentinhaber: **ROBERT BOSCH GMBH**
**70442 Stuttgart (DE)**

(72) Erfinder:
• **Wild, Ernst**
**71739 Oberriexingen (DE)**

• **Wegener, Sabine**
**71679 Asperg (DE)**

(56) Entgegenhaltungen:
**EP-A- 1 091 106      US-A- 4 355 503**
**US-A- 6 067 800      US-A1- 2002 100 279**

• **OUENOU-GAMO S ET AL: "A nonlinear controller of a turbocharged diesel engine using sliding mode" , CONTROL APPLICATIONS, 1997., PROCEEDINGS OF THE 1997 IEEE INTERNATIONAL CONFERENCE ON HARTFORD, CT, USA 5-7 OCT. 1997, NEW YORK, NY, USA,IEEE, US, PAGE(S) 803-805 XP010250842 ISBN: 0-7803-3876-6 * Seite 804 ***

• **PATENT ABSTRACTS OF JAPAN vol. 2000, no. 15, 6. April 2001 (2001-04-06) -& JP 2000 356162 A (NISSAN MOTOR CO LTD), 26. Dezember 2000 (2000-12-26)**

EP 1 460 252 B1

**Beschreibung**

Stand der Technik

Die Erfindung geht von einem Verfahren und von einer Vorrichtung zum Betrieb einer Brennkraftmaschine nach der Gattung der unabhängigen Ansprüche aus.

Für verschiedene Zwecke, wie zum Beispiel zur Berechnung des Restgases im Brennraum der Brennkraftmaschine wird die Kenntnis des Druckes in Strömungsrichtung nach dem oder den Auslassventilen benötigt. Dieser Druck wird auch als Abgasgegendruck bezeichnet. Um die Kosten für einen Drucksensor zu sparen, wird dieser Druck modelliert. Bei einem Saugmotor berechnet das Modell aus dem Umgebungsdruck und dem Druckabfall in der Auspuffanlage den Druck in Strömungsrichtung des Abgases nach dem oder den Auslassventilen. Bei Motoren mit Abgasturboladern befindet sich in Strömungsrichtung nach dem oder den Auslassventilen eine Turbine des Abgasturboladers. In einem Bypass zur Turbine sitzt eine Klappe, die von einer Ladedruckregelung zur Steuerung des Abgasmassenstroms über die Turbine verstellt werden kann. Zur Bestimmung des Abgasgegendruckes ist der Druckabfall an der Turbine mit dem Bypass zu berücksichtigen.

Aus der XP-0102508542 ist es bekannt, die Gasmasse im Absaugrohr zwischen Auslassventil und Turbine durch Differenzbildung zwischen zufließendem und abfließendem Abgasmassenstrom zu bestimmen und mittels der allgemeinen Gasgleichung in den Abgasgegendruck hinter dem Auslassventil umzurechnen.

Vorteile der Erfindung

Das erfindungsgemäße Verfahren und die erfindungsgemäße Vorrichtung mit den Merkmalen der unabhängigen Ansprüche haben demgegenüber den Vorteil, dass die Turbine einen Bypassumfasst und dass der von der Turbine abflineßende Abgosmassenstrom aus der Summe eines konstanten Normmassenstroms durch die Turbine sellst und eines von einem Öffnungsquerschnitt der Bypasses abhänginen Normmassenstroms durch der Bypass gebildet wird.

Auf diese Weise lässt sich ohne zusätzlichen Drucksensor der Abgasgegendruck mit hoher Genauigkeit sowohl für stationäre als auch für dynamische Betriebsbedingungen der Brennkraftmaschine ermitteln.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, wenn die Abgasmasse durch Integration der Differenz zwischen dem von dem mindestens einen Auslassventil in das Volumen zufließenden Abgasmassenstrom und dem aus dem Volumen abfließenden Abgasmassenstrom ermittelt wird. Somit lässt sich die für die Ermittlung des Abgasgegendrucks verwendete Abgasmasse im Volumen zwischen dem mindestens einen Auslassventil der Brennkraftmaschine und der Turbine des Abgasturboladers besonders einfach und präzise bestimmen.

Ein weiterer Vorteil ergibt sich, wenn der aus dem Volumen abfließende Abgasmassenstrom zumindest durch den von der Turbine abfließenden Abgasmassenstrom gebildet wird. Auf diese Weise lässt sich besonders für den Fall, in dem keine Abgasrückführung vorgesehen ist, die für die Ermittlung des Abgasgegendrucks verwendete Abgasmasse im Volumen zwischen dem mindestens einen Auslassventil der Brennkraftmaschine und der Turbine des Abgasturboladers besonders einfach und präzise bestimmen.

Ein weiterer Vorteil ergibt sich, wenn die Turbine einen Bypass umfasst und der von der Turbine abfließende Abgasmassenstrom aus der Summe eines konstantes Normmassenstroms durch die Turbine selbst und eines von einem Öffnungsquerschnitt des Bypasses abhängigen Normmassenstroms durch den Bypass gebildet wird. Auf diese Weise wird sowohl der Abgasmassenstrom durch den Bypass, als auch der Abgasmassenstrom durch die Turbine berücksichtigt und somit die zu bestimmende Abgasmasse besonders genau bestimmt. Der Einfluss des Bypasses auf den Abgasgegendruck kann somit berücksichtigt werden.

Vorteilhaft ist es, wenn der Normmassenstrom durch den Bypass in Abhängigkeit des Öffnungsquerschnitts des Bypasses aus einer Kennlinie ermittelt wird. Auf diese Weise ist keine zusätzliche Sensorik zur Ermittlung des Normmassenstroms durch den Bypass erforderlich, so dass Aufwand eingespart werden kann.

Vorteilhaft ist weiterhin, wenn Abweichungen von Normbedingungen bei der Ermittlung des von der Turbine abfließenden Abgasmassenstroms durch mindestens einen Korrekturfaktor für Temperatur, Druck und/oder Strömungsgeschwindigkeit berücksichtigt werden. Auf diese Weise werden aktuelle Betriebs- bzw. Umweltbedingungen der Brennkraftmaschine bei der Ermittlung des Abgasgegendruckes berücksichtigt, so dass dieser besonders genau ermittelt werden kann.

Besonders vorteilhaft ist es, wenn der aus dem Volumen abfließende Abgasmassenstrom außerdem durch einen Abgasmassenstrom gebildet wird, der über einen Abgasrückführkanal abfließt. Auf diese Weise lässt sich bei der Ermittlung der Abgasmasse im Volumen zwischen dem mindestens einen Auslassventil der Brennkraftmaschine und der Turbine des Abgasturboladers die Verwendung des Abgasrückführkanals und damit des Volumens zwischen dem mindestens einen Auslassventil der Brennkraftmaschine und dem Abgasrückführventil berücksichtigen, so dass der Abgasgegendruck auch in diesem Fall richtig berechnet werden kann.

Besonders vorteilhaft ist es, wenn ein Korrekturfaktor für den Druck aus einem Quotienten des ermittelten Druckes nach dem mindestens einen Auslassventil und einem Normdruck gebildet wird. Auf diese Weise wird der ermittelte Abgasgegendruck zur Berechnung des von der Turbine abfließenden Abgasmassenstroms zurückgekoppelt. Vorteilhaft ist weiterhin, wenn der Korrekturfaktor für die Strömungsgeschwindigkeit aus einer Kennlinie in Abhängigkeit eines Quotienten eines Druckes nach der Turbine im Falle des von der Turbine abfließenden Abgasmassenstroms bzw. eines Saugrohrdruckes im Falle des über den Abgasrückführkanal abfließenden Abgasmassenstroms und des ermittelten Druckes nach dem mindestens einen Auslassventil ermittelt wird. Auch auf diese Weise wird eine Rückkopplung des ermittelten Abgasgegendruckes zur Berechnung des von der Turbine bzw. über den Abgasrückführkanal abfließenden Abgasmassenstroms realisiert.

Zeichnung

Ein Ausführungsbeispiel der Erfindung ist in der Zeichnung dargestellt und in der nachfolgenden Beschreibung näher erläutert.
Es zeigen

Figur 1     ein Blockschaltbild einer Brennkraftmaschine mit Abgasturbolader und
Figur 2     ein erstes Funktionsdiagramm zur Veranschaulichung des erfindungsgemäßen Verfahrens und der erfindungsgemäßen Vorrichtung ohne Abgasrück- führung und
Figur 3     ein zweites Funktionsdiagramm zur Veranschaulichung des erfindungsgemäßen Verfahrens und der erfindungsgemäßen Vorrichtung mit Abgasrückführung.

Beschreibung des Ausführungsbeispiels

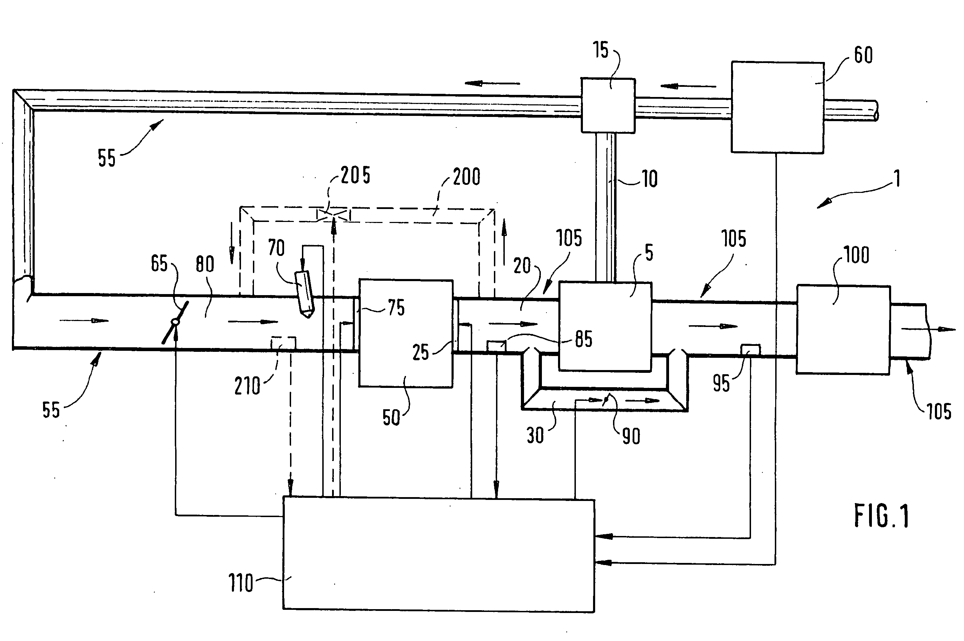

In Figur 1 kennzeichnet 1 eine Brennkraftmaschine, beispielsweise eines Kraftfahrzeugs. Die Brennkraftmaschine 1 umfasst einen Verbrennungsmotor 50, der beispielsweise als Otto-Motor oder als Diesel-Motor ausgebildet sein kann. Im Folgenden wird beispielhaft angenommen, dass der Verbrennungsmotor 50 als Otto-Motor ausgebildet ist. Über eine Luftzufuhr 55 wird dem Otto-Motor 50 Frischluft zugeführt. Die Strömungsrichtung der Frischluft ist dabei in Figur 1 durch Pfeile dargestellt. In der Luftzufuhr 55 ist ein Luftmassenmesser 60, beispielsweise ein Heißfilm-Luftmassenmesser angeordnet, der den zugeführten Luftmassenstrom misst und das Messergebnis an eine Motorsteuerung 110 zur Weiterverarbeitung weiterleitet. Dem Luftmassenmesser 60 in Strömungsrichtung nachfolgend angeordnet ist in der Luftzufuhr 55 eine Drosselklappe 65, deren Öffnungsgrad von der Motorsteuerung 110 eingestellt wird. Der Drosselklappe 65 in Strömungsrichtung nachfolgend angeordnet ist gemäß Figur 1 ein Einspritzventil 70, über das Kraftstoff eingespritzt wird, und das von der Motorsteuerung 110 zur Realisierung einer vorgegebenen Einspritzmenge, beispielsweise zur Einhaltung eines vorgegebenen Luft-/Kraftstoff-Gemischverhältnisses angesteuert wird. Frischluft und Kraftstoff gelangen über ein Einlassventil 75 in einen Brennraum des Otto-Motors 50. Der Abschnitt der Luftzufuhr 55 zwischen der Drosselklappe 65 und dem Einlassventil 75 wird auch als Saugrohr 80 bezeichnet. Das im Brennraum des Otto-Motors 50 befindliche Luft-/Kraftstoff-Gemisch wird durch eine in Figur 1 nicht dargestellte Zündkerze gezündet und treibt in bekannter Weise einen oder mehrere Kolben des Otto-Motors 50 an. Das bei der Verbrennung entstandene Abgas wird über ein Auslassventil 25 in einen Abgasstrang 105 der Brennkraftmaschine 1 ausgestoßen. Die Öffnungs- und Verschluss-Zeiten des Einlassventils 75 und des Auslassventils 25 können von der Motorsteuerung 110 im Falle einer voll variablen Ventilsteuerung eingestellt werden. Alternativ können die Öffnungs- und Verschlusszeiten des Einlassventils 75 und des Auslassventils 25 durch eine jeweils zugeordnete Nockenwelle in dem Fachmann bekannter Weise eingestellt werden. Die Strömungsrichtung des Abgases im Abgasstrang 105 ist ebenfalls durch Pfeile gekennzeichnet. Dem Auslassventil 25 in Strömungsrichtung des Abgases nachfolgend angeordnet ist eine Turbine 5 eines Abgasturboladers, die von einem Bypass 30 umgangen werden kann. Der Bypass 30 umfasst dazu ein Bypassventil 90, dessen Öffnungsgrad ebenfalls von der Motorsteuerung 110 zur Erzielung eines vorgegebenen Ladedrucks eingestellt werden kann. Das Volumen des Abgasstrangs 105 zwischen dem Auslassventil 25 und der Turbine 5 ist in Figur 1 mit dem Bezugszeichen 20 gekennzeichnet. Im Volumen 20 kann, wie in Figur 1 dargestellt, optional ein Temperatursensor 85 angeordnet sein, der die Temperatur im Volumen 20 misst und den Messwert an die Motorsteuerung 110 weiterleitet. Die vom Abgasmassenstrom angetriebene Turbine 5 des Abgasturboladers treibt über eine Welle 10 einen Verdichter 15 des Abgasturboladers in der Luftzufuhr 55 zur Verdichtung der der Brennkraftmaschine 1 zugeführten Luft an. Der Luftmassenmesser 60 ist dabei dem Verdichter 15 in Strömungsrichtung der Frischluft vorgeschaltet. Der Turbine 5 in Strömungsrichtung des Abgases nachfolgend angeordnet ist beispielsweise ein Katalysator 100. Zwischen der Turbine 5 und dem Katalysator 100 kann optional ein Drucksensor 95 angeordnet sein, der den Druck zwischen der Turbine 5 und dem Katalysator 100 misst und das Messergebnis an die Motorsteuerung 110 weiterleitet.
Je nach Anzahl der Zylinder des Otto-Motors 50 können ein oder mehrere Einlassventile 75 und ein oder mehrere Auslassventile 25 vorgesehen sein. Ferner kann statt der in Figur 1 dargestellten Saugrohreinspritzung eine Direkteinspritzung von Kraftstoff in den Brennraum des Otto-Motors 50 erfolgen. Im Falle der Ausbildung des Verbrennungsmotors 50 als Diesel-motor kann auf die Drosselklappe 65 und die in Figur 1 nicht dargestellte Zündkerze verzichtet werden.

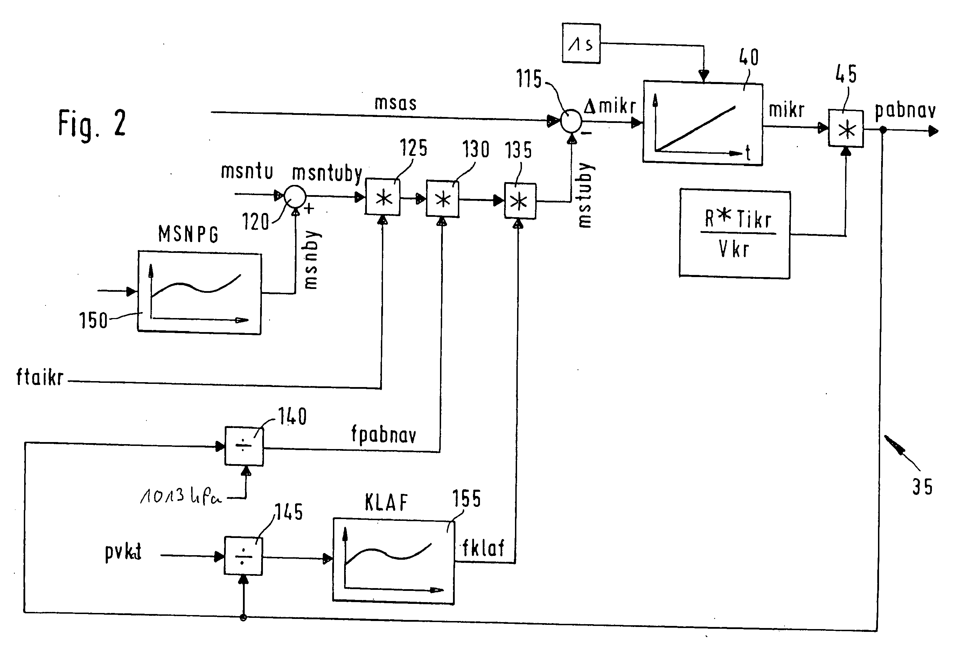

In Figur 2 ist ein Funktionsdiagramm zur Ermittlung des Druckes in Strömungsrichtung des Abgases nach dem Auslassventil 25 dargestellt. Dieser Druck wird auch als Abgasgegendruck bezeichnet und im Folgenden durch die Abkürzung pabnav repräsentiert. Die Kenntnis des Abgasgegendrucks ist insbesondere zur Ermittlung des Restgases im Brennraum des Otto-Motors 50 erforderlich. Ein Integrator 40 bildet das Massenspeicherverhalten des Volumens 20 zwischen dem Auslassventil 25 und der Turbine 5 nach. Dieser Abschnitt des Abgasstrangs 105 zwischen dem Auslassventil 25 und der Turbine 5 wird auch als Abgaskrümmer bezeichnet und das Volumen 20 auch als Krümmervolumen. Eingangsgröße des Integrators 40 ist die Differenz Δmikr zwischen dem Abgasmassenstrom msas der dem Volumen 20 von dem Auslassventil 25 zufließt, und dem über die Turbine 5 und den Bypass 30 abfließenden Abgasmassenstrom mstuby. Die Differenz Δmikr wird dabei in einem ersten Subtraktionsglied 115 gebildet. Der von dem Auslassventil 25 zufließende Abgasmassenstrom msas kann in der Motorsteuerung 110 aus dem vom Luftmassenmesser 60 gemessenen Luftmassenstrom und dem eingespritzten Kraftstoffmassenstrom berechnet werden. Der eingespritzte Kraftstoffmassenstrom ist, wie beschrieben, eine bekannte Größe in der Motorsteuerung 110, da er von der Motorsteuerung 110 zur Einstellung eines vorgegebenen Luft-/Kraftstoff-Gemischverhältnisses in Abhängigkeit des gemessenen Luftmassenstroms vorgegeben wird. Die Ermittlung des vom Auslassventil 25 in das Volumen 20 zufließenden Abgasmassenstroms msas aus dem vom Luftmassenmesser 60 gemessenen Luftmassenstrom und dem in der Motorsteuerung 110 bekannten eingespritzten Kraftstoffmassenstrom erfolgt in dem Fachmann bekannter Weise mit Hilfe eines Modells.

Bei positiver Differenz Δmikr fließt mehr Abgas in das Volumen 20 zu als ab. Die Abgasmasse mikr im Volumen 20 als Ausgangsgröße des Integrators 40 steigt dann an. Bei negativer Differenz Δmikr fließt mehr ab als zu. Die Abgasmasse mikr im Volumen 20 sinkt dann. Ist die Differenz Δmikr gleich Null, so ist der Abgaszufluss im Volumen 20 gleich groß, wie der Abgasabfluss und die Abgasmasse mikr im Volumen 20 bleibt konstant.

Mit der allgemeinen Gasgleichung wird die Abgasmasse mikr im Volumen 20 in den Druck pabnav in Strömungsrichtung nach dem Auslassventil 25 umgerechnet. Dieser Abgasgegendruck pabnav ergibt sich somit mit Hilfe der allgemeinen Gasgleichung zu:

$$pabnav = mikr * R * Tikr / Vkr \qquad\qquad (1)$$

Dabei ist R die allgemeine Gaskonstante, Tikr die Gastemperatur im Volumen 20 und Vkr das Volumen 20 beispielsweise in $m^3$. Die Gastemperatur oder Abgastemperatur Tikr im Volumen 20 kann entweder vom Temperatursensor 85 gemessen werden oder, um den Temperatursensor 85 einzusparen, in der Motorsteuerung 110 über ein Modell in dem Fachmann bekannter Weise aus dem eingespritzten Kraftstoffmassenstrom, dem Abgasmassenstrom msas, der vom Auslassventil 25 in das Volumen 20 zufließt und im Falle des Otto-Motors 50 in Abhängigkeit vom Zündwinkelwirkungsgrad berechnet werden. Das Volumen Vkr des Abgaskrümmers 20 kann in der Motorsteuerung 110 als bekannte Größe abgespeichert sein. Entsprechendes gilt für die allgemeine Gaskonstante R. Im Funktionsdiagramm gemäß Figur 2 sind dann Mittel 45 zur Ermittlung des Abgasgegendrucks pabnav in Form eines ersten Multiplikationsgliedes 45 vorgesehen, die die Abgasmasse mikr am Ausgang des Integrators 40 mit dem Quotienten R * Tikr/Vkr multiplizieren. Das Ergebnis ist der Abgasgegendruck pabnav. Der Abgasgegendruck pabnav wird für die Berechnung des aus dem Volumen 20 abfließenden Abgasmassenstroms zurückgekoppelt. Mit der Annahme, dass sich die Turbine 5 und der Bypass 30 bezüglich des Durchflussverhaltens des Abgases in Form einer Drossel beschreiben lassen, gilt unter Normbedingungen, dass der aus dem Volumen 20 über die Turbine 5 und den Bypass 30 abfließende Normmassenstrom msntuby sich aus der Summe des Normmassenstroms msntu über die Turbine 5 und den Normmassenstrom msnby über den Bypass 30 zusammensetzt. Der Normmassenstrom msntu über die Turbine 5 und der Normmassenstrom msnby über den Bypass 30 werden in einem ersten Additionsglied 120 addiert und bilden so den über die Turbine 5 und den Bypass 30 abfließenden Normmassenstrom msntuby. Die Normbedingungen sind beispielsweise wie folgt vorgegeben:

Der Normdruck pabnav_norm in Strömungsrichtung des Abgases nach dem Auslassventil 25 beträgt 1013 hPa. Die Normabgastemperatur Taikr_norm im Krümmer 20 beträgt 273 K. Die Normströmungsgeschwindigkeit im Volumen 20 ist gleich der Schallgeschwindigkeit.

Für die Berechnung des Abgasgegendrucks pabnav wird angenommen, dass sowohl die Turbine 5, als auch der Bypass 30 mit dem Bypassventil 90 strömungstechnisch jeweils als eine Drossel beschrieben werden können. Sowohl die Turbine 5, als auch der Bypass 30 mit dem Bypassventil 90 haben den Druck und die Temperatur vor und nach der jeweiligen Drossel gemeinsam.

Bei der Turbine 5 ist der Normmassenstrom msntu unter Normbedingungen in der Motorsteuerung 110 bekannt und konstant. Der Normmassenstrom msnby des Bypasses 30 ist abhängig vom Öffnungsquerschnitt im Bereich des Bypassventils 90. Die Stellung des Bypassventils 90, das gemäß Figur 1 als Drosselklappe ausgebildet sein kann, ist abhängig vom Hub eines in Figur 1 nicht dargestellten Stellgliedes oder Stellers zur Einstellung der Stellung des Bypassventils 90. Dieser Hub wird von der Motorsteuerung 110 zur Einstellung eines vorgegebenen Ladedrucks vorgegeben. Der Öffnungsquerschnitt des Bypasses 30 im Bereich des Bypassventils 90 hängt von diesem Hub des Stellers ab. Die erfindungsgemäße Vorrichtung 35 gemäß dem Funktionsdiagramm nach Figur 2 ist beispielsweise in der Motorsteuerung 110 software- und/oder hardwaremäßig realisiert. Die Vorrichtung 35 umfasst eine Kennlinie MSNPG, die in Figur 2 mit dem Bezugszeichen 150 gekennzeichnet ist und die als Eingangsgröße den Hub des Stellers des Bypassventils 90 und als Ausgangsgröße den Normmassenstrom msnby durch den Bypass 30 aufweist. Die Kennlinie MSNPG beschreibt somit den Zusammenhang zwischen dem Normmassenstrom msnby durch den Bypass 30 in Abhängigkeit vom Hub des Stellers des Bypassventils 90. Die Kennlinie MSNPG kann beispielsweise auf einem Prüfstand unter den genannten Normbedingungen appliziert werden. Der sich bildende Normmassenstrom msnby in Abhängigkeit des jeweils von der Motorsteuerung 110 vorgegebenen Hubs des Stellers des Bypassventils 90 kann für die Applikation der Kennlinie MSNPG durch einen Massenstrommesser im Volumen 20 ermittelt werden oder durch den Luftmassenmesser 60 und der bekannten Kraftstoffmasse im stationären Zustand der Brennkraftmaschine.

Weicht mindestens eine der Betriebs- oder Umweltbedingungen der Brennkraftmaschine 1 von den genannten Normbedingungen ab, dann werden mit Hilfe eines oder mehrer Korrekturfaktoren die Abweichung oder die Abweichungen in der Berechnung des über die Turbine 5 und den Bypass 30 abfließenden Abgasmassenstroms berücksichtigt. Über einen ersten Korrekturfaktor ftaikr kann eine Abweichung der aktuellen Temperatur von der Normtemperatur berücksichtigt werden. Der erste Korrekturfaktor ftaikr wird wie folgt gebildet:

$$ftaikr = \sqrt{\frac{Taikr\_norm}{Taikr}} \qquad (2)$$

Dabei ist Taikr die aktuelle Abgastemperatur im Krümmer 20 und entspricht damit der Temperatur Tikr aus Gleichung (1).

Der erste Korrekturfaktor ftaikr wird über ein zweites Multiplikationsglied 125 mit dem über die Turbine 5 und den Bypass 30 abfließenden Normmassenstrom msntuby multipliziert.

Ein zweiter Korrekturfaktor fpabnar berücksichtigt die Abweichung des aktuell ermittelten Abgasgegendrucks pabnav vom Normdruck pabnav_norm. Der zweite Korrekturfaktor wird wie folgt gebildet:

$$fpabnav = \frac{pabnav}{pabnav\_norm} \qquad (3)$$

Der zweite Korrekturfaktor fpabnav wird mittels eines ersten Divisionsgliedes 140 durch Division des ermittelten Abgasgegendrucks pabnav durch den Normdruck pabnav_norm von in diesem Beispiel 1013 hPa gebildet und in einem dritten Multiplikationsglied 130 mit dem Ausgang des zweiten Multiplikationsgliedes 125 multipliziert.

Ferner ist ein dritter Korrekturfaktor fklaf vorgesehen, der die Abweichung der aktuellen Strömungsgeschwindigkeit des Abgases im Volumen 20 von der Schallgeschwindigkeit berücksichtigt. Der dritte Korrekturfaktor fklaf ist dabei wie folgt gegeben:

$$fklaf = \frac{aktuelle\ Strömungsgeschwindigkeit}{Schallgeschwindigkeit} \qquad (4)$$

Der dritte Korrekturfaktor fklaf hängt vom Verhältnis des Druckes pvkat im Abgasstrang 105 in Strömungsrichtung des Abgases nach der Turbine 5 und vor dem Katalysator 100 zum ermittelten Abgasgegendruck pabnav in Strömungsrichtung des Abgases nach dem Auslassventil 25 und vor der Turbine 5 ab. Diese Abhängigkeit ist gemäß der Vorrichtung 35 in Figur 2 durch die Kennlinie KLAF berücksichtigt, die auch durch das Bezugszeichen 155 gekennzeichnet ist. Sie liefert als Ausgangsgröße den dritten Korrekturfaktor fklaf. Als Eingangsgröße ist ihr der Quotient pvkat/pabnav zugeführt, der in einem zweiten Divisionsglied 145 gebildet wird. Der Druck pvkat in Strömungsrichtung des Abgases nach der Turbine 5 und vor dem Katalysator 100 kann durch den Drucksensor 95 erfasst werden. Ist entgegen dem hier beschriebenen Ausführungsbeispiel nach Figur 1 kein Katalysator vorhanden, so handelt es sich bei diesem Druck um den in Strömungsrichtung des Abgases nach der Turbine 5 vorliegenden Druck, der dann allgemein auch mit pntu bezeichnet wird. Im vorliegenden Beispiel ist pntu gleich pvkat.

Der Druck pvkat zwischen der Turbine 5 und dem Katalysator 100 im Abgasstrang 105 kann auch berechnet werden, so dass der Drucksensor 95 in diesem Fall nicht erforderlich ist. Der Druck pvkat berechnet sich dabei zu:

$$pvkat = pu + \Delta p \tag{5}$$

Dabei ist pu der Umgebungsdruck, der beispielsweise durch einen Umgebungsdrucksensor gemessen werden kann. $\Delta p$ ist die Druckdifferenz zwischen dem Umgebungsdruck an der Auspufföffnung und dem Druck zwischen der Turbine 5 und dem Katalysator 100 im Abgasstrang 105. Die Druckdifferenz $\Delta p$ kann beispielsweise in Abhängigkeit des das Auslassventil 25 in das Volumen 20 verlassenden Abgasmassenstroms msas mit Hilfe einer beispielsweise auf einem Prüfstand applizierten Kennlinie ermittelt werden. Bei der Applikation dieser Kennlinie kann für vorgegebene Abgasmassenströme msas mit Hilfe eines für die Applikation verwendeten Drucksensors jeweils die zugeordnete Druckdifferenz $\Delta p$ ermittelt und zur Bedatung der Kennlinie verwendet werden.

Auch die Kennlinie KLAF kann beispielsweise auf einem Prüfstand appliziert oder aus der in der Literatur bekannten Ausflusskennlinie abgeleitet werden. Dabei kann der Druck pvkat in Strömungsrichtung nach der Turbine 5 und vor dem Katalysator 100 mittels des Drucksensors 95 und der Druck pabnav mit Hilfe der Vorrichtung 35 oder eines separaten Drucksensors im Volumen 20 ermittelt werden. Unterschiedliche Druckverhältnisse pvkat/pabnav können durch geeignete Ansteuerung des Öffnungsgrades des Bypassventils 90 von der Motorsteuerung 110 vorgegeben werden. Für die verschiedenen vorgegebenen Druckverhältnisse pvkat/pabnav kann dann bei der Applikation beispielsweise mit Hilfe eines Luftmassenstrommessers im Volumen 20 die Strömungsgeschwindigkeit des Abgases ermittelt und in Bezug zur Schallgeschwindigkeit gesetzt werden, um für die vorgegebenen Werte pvkat/pabnav den jeweils zugeordneten dritten Korrekturfaktor fklav zu erhalten und damit die Kennlinie KLAF zu bedaten.

Der dritte Korrekturfaktor fklaf wird in einem vierten Multiplikationsglied 135 mit dem Ausgang des dritten Multiplikationsgliedes 130 multipliziert, so dass sich am Ausgang des vierten Multiplikationsgliedes 135 der bei den aktuellen Betriebs- bzw. Umweltbedingungen der Brennkraftmaschine 1 über die Turbine 5 und den Bypass 30 insgesamt aus dem Volumen 20 abfließende Abgasmassenstrom mstuby ergibt, der im ersten Subtraktionsglied 115 vom aus dem Auslassventil 25 in das Volumen 20 austretenden Abgasmassenstrom msas abgezogen wird.

Bei Druckverhältnissen pvkat/pabnav < 0,52 liefert die Kennlinie KLAF den Wert 1. Das Abgas strömt mit Schallgeschwindigkeit durch das Volumen 20. Mit steigendem Druckverhältnis pvkat/pabnav sinkt die Strömungsgeschwindigkeit des Abgases im Volumen 20, bis sie bei einem Druckverhältnis pvkat/pabnav = 1 den Wert Null erreicht. Ist abweichend von dem hier beschriebenen Beispiel kein Bypass um die Turbine 5 vorhanden, so entfällt das erste Additionsglied 120 und die Eingangsgröße des ersten Multiplikationsgliedes 125 ist der Normmassenstrom msntu durch die Turbine 5.

Die Zeitkonstante des Integrators 40 beträgt beispielsweise eine Sekunde. Die Zeitkonstante kann dabei so gewählt werden, dass sie die Einschwingzeit des Integrators 40 unter den geschilderten Normbedingungen repräsentiert. Diese Einschwingzeit kann beispielsweise ebenfalls auf einem Prüfstand bei vorliegenden Normbedingungen, insbesondere hinsichtlich Temperatur und Druck, ermittelt werden. Dabei kann nach Einstellen eines konstanten Arbeitspunktes der Brennkraftmaschine für verschiedene vorgegebene Zeitkonstanten diejenige ermittelt werden, bei der der Abgasgegendruck pabnav am schnellsten einen stabilen Wert erreicht.

Die bisherige Beschreibung beschränkt sich auf einen Fall ohne Abgasrückführung. Im Folgenden wird die Bestimmung des Abgasgegendruckes pabnav bei einer Brennkraftmaschine 1 mit Abgasrückführung beschrieben. Dazu ist wie in Figur 1 gestrichelt dargestellt ein Abgasrückführkanal 200 vorgesehen, der vom Abgasstrang 105 zwischen dem Auslassventil 25 und der Turbine 5 abzweigt, ein Abgasrückführventil 205 umfasst und in das Saugrohr 80 zwischen der Drosselklappe 65 und dem Einlassventil 75 mündet. Die Strömungsrichtung des rückgeführten Abgases im Abgasrückführkanal 200 ist in Figur 1 durch gestrichelte Pfeile dargestellt. Das Abgasrückführventil 205 wird von der Motorsteuerung 110 derart angesteuert, dass sich eine gewünschte Abgasrückführrate ergibt. Zusätzlich kann im Saugrohr 80 ein Saugrohrdrucksensor 210 angeordnet sein, der den Druck im Saugrohr 80 misst und das Messergebnis in Form eines Messsignals an die Motorsteuerung 110 weiterleitet.

Das rückgeführte Abgas nimmt als Inertgas an der Verbrennung im Brennraum des Verbrennungsmotors 50 Teil und senkt die Verbrennungstemperatur und damit die Bildung von NOx. Der Abgasrückführkanal 200 stellt dabei einen weiteren Abfluss aus dem Abgasstrang 105 dar und das Abgasrückführventil 205 verhält sich wie eine Blende. Der über den Abgasrückführkanal 200 aus dem Abgasstrang 105 weggeführte Abgasmassenstrom kann deshalb ähnlich wie der Abgasmassenstrom über die Turbine 5 und den Bypass 30 bestimmt werden. Unterschiedlich ist lediglich die Strömungsgeschwindigkeit, weil sie im Falle der Abgasrückführung eine Funktion des Druckverhältnisses aus dem Saugrohrdruck psr und dem Abgasgegendruck pabnav ist. Der Saugrohrdruck psr kann dabei durch den Saugrohrdrucksensor 210 gemessen oder in dem Fachmann bekannter Weise aus anderen Betriebsgrößen der Brennkraftmaschine 1 modelliert werden. Für den Abgasmassenstrom msagr, der über den Abgasrückführkanal 200 vom Abgasstrang 105 weggeführt wird, gilt:

$$\text{msagr} = \text{msnagr}(\text{Hub\_agr}) * \text{ftaikr} * \text{fpabnav} * \text{f1klaf}\,(\text{psr/pabnav}) \qquad (6)$$

Dabei ist msnagr ein normierter Abgasmassenstrom, der sich gemäß einer vom Hersteller des Abgasrückführventils 205 vorgegebenen Kennlinie unter den obengenannten Normbedingungen abhängig vom Hub Hub_agr des Abgasrückführventils 205 ergibt. Der Hub Hub_agr des Abgasrückführventils 205 wird von der Motorsteuerung 110 zur Erzielung der gewünschte Abgasrückführrate eingestellt und ist somit in der Motorsteuerung 110 bekannt, so dass die Motorsteuerung 110 aus dem Hub Hub_agr anhand der vom Hersteller vorgegebenen und in der Motorsteuerung 110 bekannten Kennlinie den normierten Abgasmassenstrom msnagr durch den Abgasrückführkanal 200 ermitteln kann.

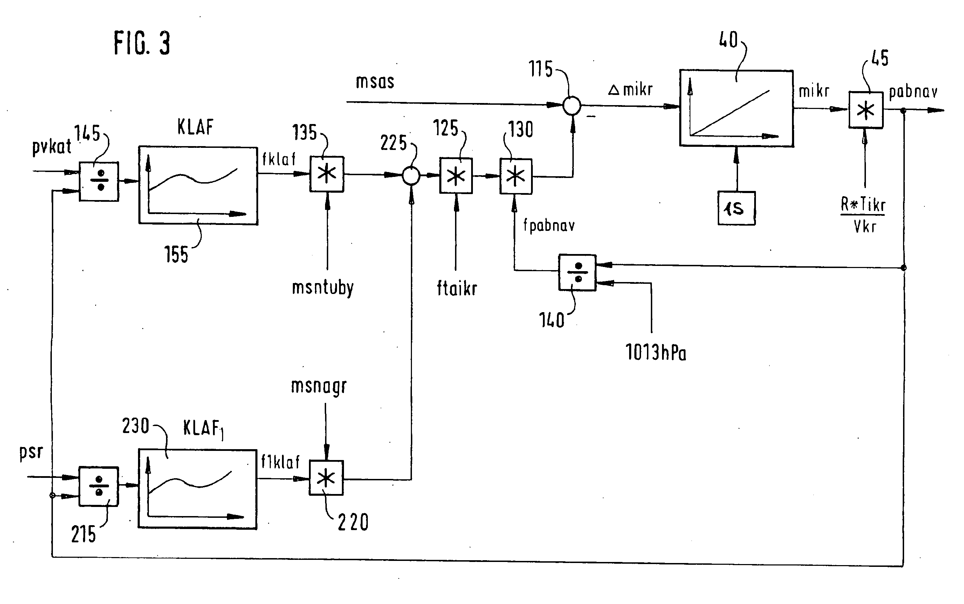

Gemäß dem Funktionsdiagramm nach Figur 3 wird die Abgasrückführung zur Bestimmung des Abgasgegendruckes pabnav berücksichtigt. Das Funktionsdiagramm nach Figur 3 ist ausgehend vom Funktionsdiagramm nach Figur 2 modifiziert, wobei in Figur 3 gleiche Bezugszeichen gleiche Elemente kennzeichnen wie in Figur 2. Gemäß dem Funktionsdiagramm nach Figur 3 wird dabei im Unterschied zu Funktionsdiagramm nach Figur 2 die dem Integrator 40 zugeführte Differenz Δmikr als im ersten Subtraktionsglied 115 gebildete Differenz zwischen dem Abgasmassenstrom msas, der dem Volumen 20 von dem Auslassventil 25 zufließt, abzüglich des Ausgangs des dritten Multiplikationsgliedes 130. Dabei wird im dritten Multiplikationsglied 130 der Ausgang des zweiten Multiplikationsgliedes 125 mit dem Ausgang des ersten Divisionsgliedes 140 multipliziert. Der Ausgang des ersten Divisionsgliedes 140 entspricht dabei dem zweiten Korrekturfakto, fpabnav, der durch Division des Abgasgegendruckes pabnav durch den Normdruck pabnav_norm=1013hPa gebildet wird. Der Ausgang des zweiten Multiplikationsgliedes 125 wird durch Multiplikation des Ausganges eines zweiten Additionsgliedes 225 mit dem ersten Korrekturfaktor ftaikr, der gemäß Gleichung (2) ermittelt wird, gebildet. Im zweiten Additionsglied 225 wird der Ausgang des vierten Multiplikationsgliedes 135 mit dem Ausgang eines fünften Multiplikationsgliedes 220 addiert. Der Ausgang des vierten Multiplikationsgliedes 135 wird durch Multiplikation des wie in Figur 2 gebildeten aus dem Volumen 20 über die Turbine 5 und den Bypass 30 abfließenden Normmassenstrom msntuby mit dem dritten Korrekturfaktor fklaf gebildet, wobei der dritte Korrekturfaktor fklaf wie in Figur 2 mittels der Kennlinie KLAF, die durch das Bezugszeichen 155 gekennzeichnet ist, gebildet wird. Der Ausgang des fünften Multiplikationsgliedes 220 wird durch Multiplikation des normierten Abgasmassenstroms msnagr mit dem Ausgang einer dritten Kennlinie 230 gebildet. Die dritte Kennlinie 230 ist in Figur 3 auch mit KLAF1 bezeichnet und kann analog zur Kennlinie KLAF auf einem Prüfstand appliziert oder aus der in der Literatur bekannten Ausflusskennlinie abgeleitet werden. Die dritte Kennlinie 230 kann dabei insbesondere der Kennlinie KLAF entsprechen, also gleich bedatet sein. Sie liefert als Ausgangssignal einen vierten Korrekturfaktor f1klaf für die Strömungsgeschwindigkeit des Abgases im Abgasrückführkanal 200 gemäß Gleichung (4). Dementsprechend ist der dritten Kennlinie 230 als Eingangsgröße der in einem dritten Divisionsglied 215 gebildete Quotient aus dem Saugrohrdruck psr geteilt durch den Abgasgegendruck pabnav zugeführt. Der vierte Korrekturfaktor f1klaf hängt also vom Verhältnis des Saugrohrdruckes psr zum ermittelten Abgasgegendruck pabnav gemäß der dritten Kennlinie 230 ab. Somit wird durch das Funktionsdiagramm gemäß Figur 3 sowohl der Abgasmassenstrom durch die Turbine 5 und den Bypass 30 als auch der Abgasmassenstrom durch den Abgasrückführkanal 200 bei der Bestimmung der Abgasmasse mikr im Volumen 20 berücksichtigt.

## Patentansprüche

1.  Verfahren zum Betrieb einer Brennkraftmaschine (1) mit einem Abgasturbolader (5, 10, 15), wobei eine Abgasmasse in einem Volumen (20) zwischen mindestens einem Auslassventil (25) der Brennkraftmaschine (1) und einer Turbine (5) des Abgasturboladers (5, 10, 15) ermittelt wird, wobei ein Druck nach dem mindestens einen Auslassventil (25) aus der Abgasmasse mittels der allgemeinen Gasgleichung ermittelt wird, wobei die Abgasmasse durch Integration der Differenz zwischen dem von dem mindestens einen Auslassventil (25) in das Volumen (20) zufließenden Abgasmassenstrom und dem aus dem Volumen (20) abfließenden Abgasmassenstrom ermittelt wird, wobei der aus dem Volumen (20) abfließende Abgasmassenstrom zumindest durch den von der Turbine (5) abfließenden Abgasmassenstrom gebildet wird, **dadurch gekennzeichnet, dass** die Turbine (5) einen Bypass (30) umfasst und dass der von der Turbine (5) abfließende Abgasmassenstrom aus der Summe eines konstanten Normmassenstroms durch die Turbine (5) selbst und eines von einem Öffnungsquerschnitt des Bypasses (30) abhängigen Normmassenstroms durch den Bypass (30) gebildet wird.

2. Verfahren nach Anspruch 1, **dadurch gekennzeichnet, dass** der Normmassenstrom durch den Bypass (30) in Abhängigkeit des Öffnungsquerschnitts des Bypasses (30) aus einer Kennlinie ermittelt wird.

3. Verfahren nach einem der vorherigen Ansprüche, **dadurch gekennzeichnet, dass** Abweichungen von Normbedingungen bei der Ermittlung des von der Turbine (5) abfließenden Abgasmassenstroms durch mindestens einen Korrekturfaktor für Temperatur, Druck und/oder Strömungsgeschwindigkeit berücksichtigt werden.

4. Verfahren nach einem der vorherigen Ansprüche, **dadurch gekennzeichnet, dass** der aus dem Volumen (20) abfließende Abgasmassenstrom außerdem durch einen Abgasmassenstrom gebildet wird, der über einen Abgasrückführkanal (200) abfließt.

5. Verfahren nach Anspruch 4, **dadurch gekennzeichnet, dass** der über den Abgasrückführkanal (200) abfließende Abgasmassenstrom aus einem Normmassenstrom in Abhängigkeit eines Hubes eines Abgasrückführventils (205) gebildet wird und dass Abweichungen von den Normbedingungen bei der Ermittlung des über den Abgasrückführkanal (200) abfließenden Abgasmassenstroms durch mindestens einen Korrekturfaktor für Temperatur, Druck und/oder Strömungsgeschwindigkeit berücksichtigt werden.

6. Verfahren nach einem der Ansprüche 3 bis 5, **dadurch gekennzeichnet, dass** ein Korrekturfaktor für die Temperatur aus einer Wurzel des Quotienten einer Normtemperatur und der aktuellen Temperatur gebildet wird, dass ein Korrekturfaktor für den Druck aus einem Quotienten des ermittelten Druckes nach dem mindestens einen Auslassventil (25) und einem Normdruck gebildet wird und dass ein Korrekturfaktor für die Strömungsgeschwindigkeit aus einem Quotienten der aktuellen Strömungsgeschwindigkeit und der Schallgeschwindigkeit ermittelt wird.

7. Verfahren nach Anspruch 6, **dadurch gekennzeichnet, dass** der Korrekturfaktor für die Strömungsgeschwindigkeit aus einer Kennlinie in Abhängigkeit eines Quotienten eines Druckes nach der Turbine (5) im Falle des von der Turbine (5) abfließenden Abgasmassenstroms bzw. eines Saugrohrdruckes im Falle des über den Abgasrückführkanal (200) abfließenden Abgasmassenstroms und des ermittelten Druckes nach dem mindestens einen Auslassventil (25) ermittelt wird.

8. Vorrichtung (35) zum Betrieb einer Brennkraftmaschine (1) mit einem Abgasturbolader (5, 10, 15), wobei Mittel (40) zur Ermittlung einer Abgasmasse in einem Volumen (20) zwischen mindestens einem Auslassventil (25) der Brennkraftmaschine (1) und einer Turbine (5) des Abgasturboladers (5, 10, 15) vorgesehen sind, wobei Mittel (45) zur Ermittlung eines Druckes nach dem mindestens einen Auslassventil (25) aus der Abgasmasse mittels der allgemeinen Gasgleichung vorgesehen sind, wobei Mittel (40) vorgesehen sind, die die Abgasmasse durch Integration der Differenz zwischen dem von dem mindestens einen Auslassventil (25) in das Volumen (20) zufließenden Abgasmassenstrom und dem aus dem Volumen (20) abfließenden Abgasmassenstrom ermitteln, wobei der aus dem Volumen (20) abfließende Abgasmassenstrom zumindest durch den von der Turbine (5) abfließenden Abgasmassenstrom gebildet wird, **dadurch gekennzeichnet, dass** die Turbine (5) einen Bypass (30) umfasst und dass Mittel (120) vorgesehen sind, die den von der Turbine (5) abfließenden Abgasmassenstrom aus der Summe eines konstanten Normmassenstroms durch die Turbine (5) selbst und eines von einem Öffnungsquerschnitt des Bypasses (30) abhängigen Normmassenstroms durch den Bypass (30) bilden.

**Claims**

1. Method for operating an internal combustion engine (1) having an exhaust-gas turbocharger (5, 10, 15), in which an exhaust-gas mass in a volume (20) between at least one exhaust valve (25) of the internal combustion engine (1) and a turbine (5) of the exhaust-gas turbocharger (5, 10, 15) is determined, in which a pressure downstream of the at least one exhaust valve (25) is determined from the exhaust-gas mass by means of the general gas equation, in which the exhaust-gas mass is determined by integration of the difference between the exhaust-gas mass flow which flows from the at least one exhaust valve (25) into the volume (20) and the exhaust-gas mass flow which flows out of the volume (20), and in which the exhaust-gas mass flow which flows out of the volume (20) is formed at least by the exhaust-gas mass flow which flows out of the turbine (5), **characterized in that** the turbine (5) comprises a bypass (30), and **in that** the exhaust-gas mass flow which flows out of the turbine (5) is formed from the sum of a constant standardized mass flow through the turbine (5) itself and a standardized mass flow through the bypass (30), which is dependent on an opening cross section of the bypass (30).

**2.** Method according to Claim 1, **characterized in that** the standardized mass flow through the bypass (30) is determined from a characteristic curve as a function of the opening cross section of the bypass (30).

**3.** Method according to one of the preceding claims, **characterized in that** deviations from standard conditions are taken into account when determining the exhaust-gas mass flow which flows out of the turbine (5) by using at least one correction factor for temperature, pressure and/or flow velocity.

**4.** Method according to one of the preceding claims, **characterized in that** the exhaust-gas mass flow which flows out of the volume (20) is also formed by an exhaust-gas mass flow which flows out via an exhaust-gas recirculation duct (200).

**5.** Method according to Claim 4, **characterized in that** the exhaust-gas mass flow which flows out via the exhaust-gas recirculation duct (200) is formed from a standardized mass flow as a function of a lift of an exhaust-gas recirculation valve (205), and **in that** deviations from the standard conditions are taken into account when determining the exhaust-gas mass flow which flows out via the exhaust-gas recirculation duct (200) by using at least one correction factor for temperature, pressure and/or flow velocity.

**6.** Method according to one of Claims 3 to 5, **characterized in that** a correction factor for the temperature is formed from a root of the quotient of a standard temperature and the current temperature, **in that** a correction factor for the pressure is formed from a quotient of the pressure determined downstream of the at least one exhaust valve (25) and a standard pressure, and **in that** a correction factor for the flow velocity is determined from a quotient of the current flow velocity and the speed of sound.

**7.** Method according to Claim 6, **characterized in that** the correction factor for the flow velocity is determined from a characteristic curve as a function of a quotient of a pressure downstream of the turbine (5), in the case of the exhaust-gas mass flow which flows out of the turbine (5), or an intake pipe pressure, in the case of the exhaust-gas mass flow which flows out via the exhaust-gas recirculation duct (200), and the pressure determined downstream of the at least one exhaust valve (25).

**8.** Apparatus (35) for operating an internal combustion engine (1) having an exhaust-gas turbocharger (5, 10, 15), in which there are means (40) for determining an exhaust-gas mass in a volume (20) between at least one exhaust valve (25) of the internal combustion engine (1) and a turbine (5) of the exhaust-gas turbocharger (5, 10, 15), in which there are means (45) for determining a pressure downstream of the at least one exhaust valve (25) from the exhaust-gas mass by means of the general gas equation, in which there are means (40) which determine the exhaust-gas mass by integration of the difference between the exhaust-gas mass flow which flows from the at least one exhaust valve (25) into the volume (20) and the exhaust-gas mass flow which flows out of the volume (20), and in which the exhaust-gas mass flow which flows out of the volume (20) is formed at least by the exhaust-gas mass flow which flows out of the turbine (5), **characterized in that** the turbine (5) comprises a bypass (30), and **in that** there are means (120) which form the exhaust-gas mass flow which flows out of the turbine (5) from the sum of a constant standardized mass flow through the turbine (5) itself and a standardized mass flow through the bypass (30), which is dependent on an opening cross section of the bypass (30).

**Revendications**

**1.** Procédé pour faire fonctionner un moteur à combustion interne (1) avec turbocompresseur à gaz d'échappement (5, 10, 15), selon lequel
on détermine une masse de gaz d'échappement dans un volume (20) entre au moins une soupape d'échappement (25) du moteur à combustion interne (1) et une turbine (5) du turbocompresseur à gaz d'échappement (5, 10, 15),
on détermine une pression en aval de la soupape d'échappement (25) à partir de la masse de gaz d'échappement au moyen de l'équation générale des gaz,
on détermine la masse de gaz d'échappement par intégration de la différence entre le flux massique de gaz d'échappement s'écoulant depuis la soupape d'échappement (25) dans le volume (20) et le flux massique de gaz d'échappement sortant du volume (20),
le flux massique de gaz d'échappement sortant du volume (20) étant formé par au moins le flux massique de gaz d'échappement sortant de la turbine (5),
**caractérisé en ce que**
la turbine (5) comprend un by-pass (30), et

le flux massique de gaz d'échappement sortant de la turbine (5) est formé à partir de la somme d'un flux massique normé constant traversant la turbine (5) elle-même et d'un flux massique normé traversant le by-pass et dépendant d'une section transversale d'ouverture du by-pass (30).

2. Procédé selon la revendication 1,
**caractérisé en ce que**
le flux massique normé traversant le by-pass (30) est déterminé à partir d'une courbe caractéristique en fonction de la section transversale d'ouverture du by-pass (30).

3. Procédé selon l'une quelconque des revendications précédentes,
**caractérisé en ce que**
lors de la détermination du flux massique de gaz d'échappement sortant de la turbine (5), des écarts par rapport à des conditions normées sont pris en compte par au moins un facteur de correction pour la température, la pression et/ou la vitesse d'écoulement.

4. Procédé selon l'une quelconque des revendications précédentes,
**caractérisé en ce que**
le flux massique de gaz d'échappement sortant du volume (20) est par ailleurs formé par un flux massique de gaz d'échappement sortant par un canal de retour de gaz d'échappement (200).

5. Procédé selon la revendication 4,
**caractérisé en ce que**
le flux massique de gaz d'échappement sortant par le canal de retour de gaz d'échappement (200) est formé à partir d'un flux massique normé en fonction d'une course d'une soupape de retour de gaz d'échappement (205) et, lors de la détermination du flux massique de gaz d'échappement sortant par le canal de retour de gaz d'échappement (200), des écarts par rapport à des conditions normées sont pris en compte par au moins un facteur de correction pour la température, la pression et/ou la vitesse d'écoulement.

6. Procédé selon l'une quelconque des revendications 3 à 5,
**caractérisé en ce qu'**
on forme un facteur de correction pour la température à partir d'une racine du quotient d'une température normée et de la température actuelle, on forme un facteur de correction pour la pression à partir d'un quotient de la pression déterminée en aval de la soupape d'échappement (25) et d'une pression normée, et un facteur de correction pour la vitesse d'écoulement à partir d'un quotient de la vitesse d'écoulement actuelle et de la vitesse du son.

7. Procédé selon la revendication 6,
**caractérisé en ce que**
le facteur de correction pour la vitesse d'écoulement est déterminé à partir d'une courbe caractéristique en fonction d'un quotient d'une pression en aval de la turbine (5) dans le cas du flux massique de gaz d'échappement sortant de la turbine (5) ou d'une pression de tube d'admission dans le cas du flux massique de gaz d'échappement sortant pas le canal de retour de gaz d'échappement (200) et de la pression déterminée en aval de l'au moins une soupape d'échappement (25).

8. Dispositif (35) pour faire fonctionner un moteur à combustion interne (1) avec turbocompresseur à gaz d'échappement (5, 10, 15), comportant
des moyens (40) pour déterminer une masse de gaz d'échappement dans un volume (20) entre au moins une soupape d'échappement (25) du moteur à combustion interne (1) et une turbine (5) du turbocompresseur à gaz d'échappement (5, 10, 15),
des moyens (45) pour déterminer une pression en aval de la soupape d'échappement (25) à partir de la masse de gaz d'échappement au moyen de l'équation générale des gaz,
des moyens (40) pour déterminer la masse de gaz d'échappement par intégration de la différence entre le flux massique de gaz d'échappement s'écoulant depuis la soupape d'échappement (25) dans le volume (20) et le flux massique de gaz d'échappement sortant du volume (20),
le flux massique de gaz d'échappement sortant du volume (20) étant formé au moins par le flux massique de gaz d'échappement sortant de la turbine (5),
**caractérisé en ce que**
la turbine (5) comprend un by-pass (30), et
des moyens (120) sont prévus pour former le flux massique de gaz d'échappement sortant de la turbine (5) à partir de la somme d'un flux massique normé constant traversant la turbine (5) elle-même et d'un flux massique normé traversant le by-pass et dépendant d'une section transversale d'ouverture du by-pass (30).

FIG.1

Fig. 2

EP 1 460 252 B1

FIG. 3